# EUROPÄISCHE PATENTSCHRIFT

(11) **EP 3 997 348 B1**
(45) Veröffentlichungstag und Bekanntmachung des Hinweises auf die Patenterteilung: **22.03.2023**
(21) Anmeldenummer: 20771229.0
(22) Anmeldetag: 03.09.2020
(51) Int. Cl.: F16B 21/07, F16B 21/08, B65D 39/02

(54) **VERBINDUNGSANORDNUNG**
CONNECTION ASSEMBLY
ENSEMBLE DE RACCORDEMENT

(30) Priorität: 06.09.2019 DE 102019123996
(43) Veröffentlichungstag der Anmeldung: 18.05.2022
(73) Patentinhaber: Elkamet Kunststofftechnik GmbH, 35216 Biedenkopf (DE)
(72) Erfinder: SCHOCH, Andreas, 35037 Marburg (DE); RÜHL, Jürgen, 61203 Reichelsheim (DE); SCHNEIDER, Marcus, 35232 Dautphetal (DE); LANDECK, David, 57319 Bad Berleburg (DE); ORTMÜLLER, Michael, 35232 Dautphetal-Herzhausen (DE)
(74) Vertreter: DREISS Patentanwälte PartG mbB
(86) Internationale Anmeldenummer: PCT/EP2020/074636
(87) Internationale Veröffentlichungsnummer: WO 2021/043920

(56) Entgegenhaltungen:
- EP-A1- 2 941 977
- EP-A2- 0 064 768
- JP-A- H09 252 809
- US-A- 5 660 513
- US-A1- 2007 134 073

## Beschreibung

Die Erfindung betrifft eine Verbindungsanordnung mit den Merkmalen des Oberbegriffs des Patentanspruchs 1, gemäß EP 2 941 977 A1 oder JP H09 252809 A.

Eine weitere Verbindungsanordnung in Form eines Druckknopfes ist beispielsweise aus der DE 10 2016 012 899 A1 bekannt. Solche Verbindungsanordnungen haben sich in der Praxis vornehmlich für Einbausituationen bewährt, in denen nur relativ geringe Haltekräfte erforderlich sind, beispielsweise für einen Jackenverschluss. Eine Erhöhung der Haltekräfte, beispielsweise zur Befestigung eines Cabrioverdecks an einem Verdeckrahmen, kann mit Druckknöpfen zwar realisiert werden; dies wird aber mit dem Nachteil erkauft, dass auch die Montagekräfte zum Fügen der beiden Knopfteile stark erhöht sind.

Hiervon ausgehend liegt der vorliegenden Erfindung die Aufgabe zugrunde, eine Verbindungsanordnung der eingangs genannten Art so zu verbessern, dass erhöhte Haltekräfte nicht notwendigerweise mit erhöhten Montagekräften einhergehen müssen.

Diese Aufgabe wird durch eine Verbindungsanordnung mit den Merkmalen des Patentanspruchs 1 gelöst.

Erfindungsgemäß wird ein Bewegungsweg vorgehalten, entlang welchem sich die Rastbereiche des mindestens einen Rastelements bewegen können, wobei der Bewegungsweg zumindest eine zu der Relativbewegungsachse parallele Komponente aufweist. Ausgehend von einem unverformten Ruhezustand des Rastelements sind die Rastbereiche in zwei zueinander entgegengesetzten Richtungen bewegbar. Dabei beziehen sich die Begriffe "Demontagerichtung" und "Montagerichtung" auf eine Bewegung des zweiten Bauteils relativ zu dem ersten Bauteil bei unterstellt unbewegtem ersten Bauteil. Zumindest der erste Teil des Bewegungswegs, der bezogen auf den Ruhezustand in die Demontagerichtung weist, ist durch mindestens einen Anschlag begrenzt, an welchem sich das mindestens eine Rastelement im Zuge der Demontage der Bauteile abstützt.

Dadurch, dass die genannten Bewegungsmöglichkeiten der Rastbereiche des mindestens einen Rastelements vorgehalten werden, sind die Montagekräfte, die zum Fügen der Verbindunganordnung aufgebracht werden müssen, vergleichsweise klein. Das Vorhalten eines Anschlags ermöglicht es dabei, die Demontage der Verbindungsanordnung so zu erschweren, dass im Montagezustand der Verbindungsanordnung hohe Haltekräfte wirken. Zum Lösen der Verbindunganordnung müssen daher vergleichsweise hohe Demontagekräfte aufgebracht werden.

Es ist vorteilhaft, wenn die Länge des ersten Teils des Bewegungswegs von der Länge des zweiten Teils des Bewegungswegs abweicht, sodass durch die Länge der jeweiligen Bewegungswege unterschiedliche Montage- und Demontagekräfte vorgebbar sind. Besonders bevorzugt ist es, wenn die Länge des ersten Teils des Bewegungswegs kürzer ist als die Länge des zweiten Teils des Bewegungswegs, was damit einhergehen kann, dass die Demontagekräfte zum Lösen der Verbindungsanordnung höher sind als die Montagekräfte zum Fügen der Verbindungsanordnung.

Der Anschlag, an welchem sich das mindestens eine Rastelement im Zuge der Demontage der Bauteile abstützt, ist in vorteilhafter Weise an dem ersten Bauteil angeordnet, sodass die Länge des ersten Bewegungswegs allein oder weitgehend durch die Geometrie des ersten Bauteils vorgebbar ist.

In vorteilhafter Weise ist das Rastelement insgesamt oder zumindest in einem Teilbereich federelastisch. Es ist bevorzugt, dass das Rastelement zumindest abschnittsweise aus einem federelastischen Material hergestellt ist, beispielsweise aus einem thermoplastischen Elastomer. Das Rastelement kann aber auch aus anderen Kunststoffmaterialien oder auch aus metallischen Werkstoffen hergestellt sein.

Erfindungsgemäß ist vorgesehen, dass sich das mindestens eine Rastelement in einer zu der Relativbewegungsachse parallelen Querschnittsebene gesehen in seinem Ruhezustand entlang einer Ebene erstreckt, die schräg zu der Relativbewegungsachse verläuft. Durch eine Orientierung der genannten Ebene schräg zu der Relativbewegungsachse kann das Verhältnis zwischen Montage- und Demontagekraft gegebenenfalls zusätzlich beeinflusst werden.

Bevorzugt ist es ferner, wenn sich das mindestens eine Rastelement in einer zu der Relativbewegungsachse parallelen Querschnittsebene gesehen zwischen einem Befestigungsabschnitt und einem freien Ende erstreckt, wobei der Befestigungsabschnitt insbesondere ringförmig ausgebildet ist und mit dem ersten Bauteil verbunden ist und wobei das freie Ende relativ zu dem Befestigungsabschnitt entlang oder parallel zu dem Bewegungsweg verschwenkbar ist. Ein solches Rastelement ermöglicht eine stabile Befestigung des Rastelements an dem ersten Bauteil. Es ist bevorzugt, dass ein mit der Rastelementaufnahme des zweiten Bauteils zusammenwirkender Rastbereich des mindestens einen Rastelements im Bereich des freien Endes des Rastelements oder hierzu angrenzend angeordnet ist.

Für eine vorstehend beschriebene Querschnittsform des Rastelements kann ein mit dem ersten Teil des Bewegungswegs korrespondierender erster Schwenkwinkel minimal circa 5° betragen und/oder maximal circa 100° betragen. Mit den genannten Winkelbereichen können hohe Haltekräfte mit moderaten Demontagekräften kombiniert werden.

Es wird ferner vorgeschlagen, dass ein mit dem zweiten Teil des Bewegungswegs korrespondierender zweiter Schwenkwinkel minimal circa 10° beträgt. Auf diese Weise können vergleichsweise niedrige Montagekräfte eingestellt werden.

In vorteilhafter Weise ist die Rastelementaufnahme durch einen bezogen auf die Relativbewegungsachse sich in radialer Richtung erstreckenden Materialvorsprung gebildet, der in dem Montagezustand der Verbindungsanordnung einen Hinterschnitt zur Aufnahme eines Rastbereichs bildet. Der sich in radialer Richtung erstreckende Materialvorsprung kann sich sowohl in Richtung nach radial außen als auch in Richtung nach radial innen erstrecken.

Bei einer Weiterbildung ist vorgesehen, dass die Verbindungsanordnung mindestens ein die Relativbewegungsachse ringförmig umfangendes Dichtelement aufweist, das in dem Montagezustand der Verbindungsanordnung zwischen dem ersten Bauteil und dem zweiten Bauteil dichtend wirksam ist. Somit bildet die Verbindungsanordnung gleichzeitig eine Dichtungsanordnung.

Es ist auch möglich, dass das erste Bauteil und/oder das zweite Bauteile eine Ausnehmung oder Aussparung zur Anordnung eines dritten Bauteils und/oder eine Öffnung zur Durchführung eines Fluids aufweist oder aufweisen. Auf diese Weise kann die Funktion der Verbindungsanordnung um die Funktion eines dritten Bauteils und/oder die Durchführung eines Fluids erweitert werden. Dies ist beispielsweise für Schlauchanschlüsse vorteilhaft, welche miteinander oder mit einem Fluidbehälter verbunden werden.

Eine Weiterbildung der Erfindung sieht vor, dass eine Einstelleinrichtung vorgesehen ist, welche mit dem ersten Bauteil oder mit dem zweiten Bauteil zumindest mittelbar verbunden ist, wobei mittels der Einstelleinrichtung in dem Montagezustand der Verbindungsanordnung die Relativlage des ersten Bauteils und des zweiten Bauteils längs der Relativbewegungsachse einstellbar ist. Diese Einstellung der Relativlage geht vorzugsweise mit einer entsprechenden Bewegung der Rastbereiche des mindestens einen Rastelements einher, sodass beispielsweise ein Abstand des mindestens einen Rastelements zu dem Anschlag einstellbar ist.

Es ist denkbar, dass die vorstehend genannte Einstelleinrichtung als Demontageeinrichtung wirksam ist, welche die Verbindungsanordnung aus dem Montagezustand in den Demontagezustand überführt. Ähnlich eines Abziehwerkzeugs kann die Einstelleinrichtung also dazu verwendet werden, die beiden Bauteile ausgehend von ihrem Montagezustand voneinander zu trennen.

Ein besonders bevorzugtes Beispiel für eine Einstelleinrichtung ist eine Verschraubeinrichtung, deren Verschraubachse parallel zu oder fluchtend mit der Relativbewegungsachse verläuft, wobei ein erster Gewindeabschnitt einem Verschraubelement und ein mit dem ersten Gewindeabschnitt verschraubter zweiter Gewindeabschnitt dem ersten Bauteil oder dem zweiten Bauteil zugeordnet ist.

Die erfindungsgemäße Verbindungsanordnung ist in Form einer Druckknopfanordnung oder einer Behälteranordnung ausgeführt. Als Druckknopfanordnung ist an dem ersten Bauteil ein Kopf und an dem zweiten Bauteil eine Kopfaufnahme vorgesehen, oder es ist an dem ersten Bauteil eine Kopfaufnahme und an dem zweiten Bauteil ein Kopf vorgesehen.

Als Behälteranordnung ist eines der beiden Bauteile in Form eines einen Hohlraum begrenzenden Behältnisses und das andere der beiden Bauteile in Form eines Deckels bereitgestellt.

Die erfindungsgemäße Verbindungsanordnung eignet sich insbesondere zur Verwendung, zur Herstellung und/oder zum Betrieb einer Medizintechnikvorrichtung. Auf dem Gebiet der Medizintechnik kommen die Vorteile der Verbindungsanordnung (moderate Montagekräfte bei hohen Haltekräften) besonders gut zum Tragen.

Weitere Merkmale und Vorteile der Erfindung sind Gegenstand der nachfolgenden Beschreibung und der zeichnerischen Darstellung bevorzugter Ausführungsbeispiele.

In der Zeichnung zeigt
- Fig. 1: eine perspektivische Ansicht einer ersten Ausführungsform einer Verbindungsanordnung in einem Demontagezustand;
- Fig. 2: eine perspektivische Ansicht der Ausführungsform gemäß Fig. 1 in einem Montagezustand;
- Fig. 3a: einen Vertikalschnitt der Ausführungsform gemäß Fig. 1 in dem Demontagezustand;
- Fig. 3b: einen in Fig. 3a mit IIIb bezeichneten Ausschnitt in vergrößerter Darstellung;
- Fig. 4: einen der Fig. 3a entsprechenden Vertikalschnitt während einer ersten Phase eines Montagevorgangs;
- Fig. 5: einen der Fig. 3a entsprechenden Vertikalschnitt während einer zweiten Phase eines Montagevorgangs;
- Fig. 6: einen Vertikalschnitt der Ausführungsform gemäß Fig. 1 in dem Montagezustand;
- Fig. 7: einen der Fig. 6 entsprechenden Vertikalschnitt während einer ersten Phase eines Demontagevorgangs;
- Fig. 8: einen der Fig. 6 entsprechenden Vertikalschnitt während einer zweiten Phase eines Demontagevorgangs;
- Fig. 9: eine perspektivische Ansicht einer weiteren Ausführungsform einer Verbindungsanordnung in einem Demontagezustand;
- Fig. 10: einen Vertikalschnitt der Ausführungsform gemäß Fig. 9 in einem Montagezustand;
- Fig. 11: eine perspektivische Ansicht einer weiteren Ausführungsform einer Verbindungsanordnung in einem Demontagezustand;
- Fig. 12: einen Vertikalschnitt der Ausführungsform gemäß Fig. 11 in einem Montagezustand;
- Fig. 13: einen Vertikalschnitt einer weiteren Ausführungsform einer Verbindungsanordnung in einem Demontagezustand;
- Fig. 14: einen der Fig. 13 entsprechenden Vertikalschnitt während einer ersten Phase eines Montagevorgangs;
- Fig. 15: einen der Fig. 13 entsprechenden Vertikalschnitt während einer zweiten Phase eines Montagevorgangs;
- Fig. 16: einen Vertikalschnitt der Ausführungsform gemäß Fig. 13 in einem Montagezustand;
- Fig. 17: einen der Fig. 16 entsprechenden Vertikalschnitt während einer ersten Phase eines Demontagevorgangs; und
- Fig. 18: einen der Fig. 16 entsprechenden Vertikalschnitt während einer zweiten Phase eines Demontagevorgangs.

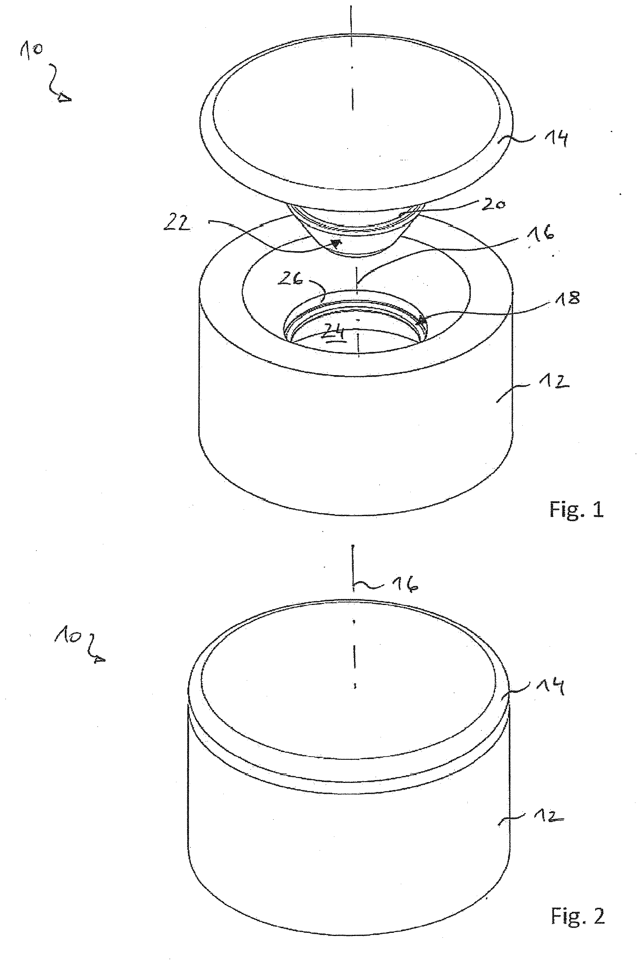

Eine Ausführungsform einer Verbindungsanordnung ist in der Zeichnung insgesamt mit dem Bezugszeichen 10 bezeichnet. Die Verbindungsanordnung umfasst ein erstes Bauteil 12 und ein zweites Bauteil 14, welche ausgehend von einem nicht miteinander gefügten Demontagezustand (vergleiche Figur 1) in einen miteinander gefügten Montagezustand (vergleiche Figur 2) überführt werden können. Ausgehend von dem Montagezustand können die Bauteile 12 und 14 auch wieder voneinander gelöst und in den Demontagezustand überführt werden und auch erneut in den Montagezustand überführt werden.

Eine Montage und Demontage der Bauteile 12 und 14 erfolgt jeweils längs einer Relativbewegungsachse 16, welche bezogen auf ein an dem ersten Bauteil 12 angeordnetes Rastelement 18 und bezogen auf eine an dem zweiten Bauteil 14 angeordnete Rastelementaufnahme 20 eine zentrale Achse der Verbindungsanordnung 10 bildet.

Die Rastelementaufnahme 20 ist an einem Kopf 22 des zweiten Bauteils 14 vorgesehen. Der Kopf 22 ist in einen Hohlraum 24 in Form einer Kopfaufnahme des ersten Bauteils 12 einführbar und aus diesem ausführbar.

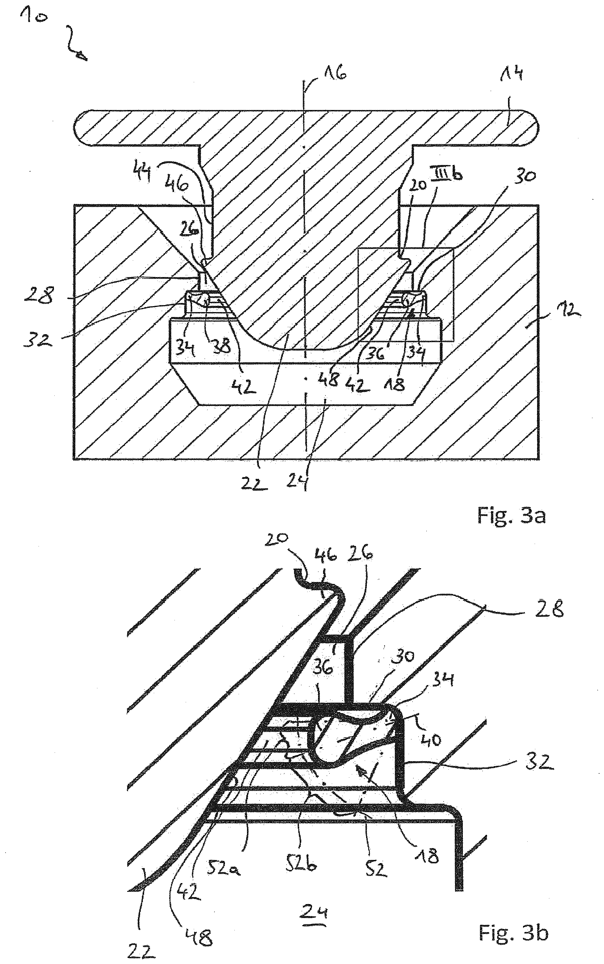

Die Kopfaufnahme 24 ist längs der Relativbewegungsachse 16 durch einen Eingang 26 begrenzt. Der Eingang 26 ist in Umfangsrichtung durch eine erste Umfangsfläche 28 (vgl. Fig. 3a) begrenzt, welche sich zylindrisch um die Relativbewegungsachse 16 herum erstreckt. Die erste Umfangsfläche 28 grenzt an einen Anschlag 30, der sich ringförmig um die Relativbewegungsachse 16 erstreckt, und zwar innerhalb einer zu der Relativbewegungsachse 16 senkrechten Ebene. Der Anschlag 30 erstreckt sich von der ersten Umfangsfläche 28 ausgehend nach radial außen bis hin zu einer zweiten Umfangsfläche 32, die im Vergleich zu ersten Umfangsfläche 28 einen größeren Radius aufweist und die sich ebenfalls zylindrisch um die Relativbewegungsachse 16 herum erstreckt.

Durch den Versatz zwischen der ersten Umfangsfläche 28 und der zweiten Umfangsfläche 32 wird ein geschützter Hinterschnittbereich gebildet, der zur Anordnung und Fixierung eines Befestigungsabschnitts 34 des Rastelements 18 dient. Das Rastelement 18 erstreckt sich im Querschnitt gesehen zwischen einem Befestigungsabschnitt 34 und einem Rastbereich 36.

Der Befestigungsabschnitt 34 ist vorzugsweise ringförmig und erstreckt sich über einen Winkel von 360° um die Relativbewegungsachse 16 herum.

Der Rastbereich 36 erstreckt sich beispielsweise über einen Winkel von 180° um die Relativbewegungsachse 16 herum und ist einem zweiten Rastbereich 38 des Rastelements 18 (oder eines zweiten Rastelements) gegenüberliegend angeordnet. Auch dieser zweite Rastbereich 38 kann sich über einen Winkel von 180° um die Relativbewegungsachse 16 herum erstrecken, sodass die beiden Rastbereiche 36 und 38 sich zu einem geschlossen ringförmigen Verlauf um die Relativbewegungsachse 16 herum ergänzen können.

Das Rastelement 18 erstreckt sich im Querschnitt gesehen entlang einer Ebene 40 zwischen dem Befestigungsabschnitt 34 und dem jeweiligen Rastbereich 36, 38. Die Ebene 40 verläuft schräg zu der Relativbewegungsachse 16 und bezieht sich auf einen unverformten Ruhezustand des Rastelements 18.

In dem in Figur 3a dargestellten Ruhezustand sind die Rastbereiche 36 und 38 zu dem Anschlag 30 beabstandet, was auch aus Figur 3b deutlich hervorgeht.

Das Rastelement 18 ist aus einem federelastischen Material hergestellt, beispielsweise aus einem thermoplastischen Elastomer. Da das Rastelement 18 lediglich im Bereich des Befestigungsabschnitts 34 mit dem ersten Bauteil 12 verbunden ist, sind ein freies Ende 42 und die daran angrenzenden Rastbereiche 36, 38 um dem Befestigungsabschnitt 34 herum oder relativ zu diesem verschwenkbar, was nachfolgend noch genauer erläutert wird.

Die Rastelementaufnahme 20 des zweiten Bauteils 14 ist nach radial innen durch einen insbesondere zylindrischen Schaft 44 begrenzt und durch einen sich ausgehend von dem Schaft 44 nach radial außen erstreckenden Materialvorsprung 46 gebildet.

Der Materialvorsprung 46 grenzt an eine relativ zu der Relativbewegungsachse 16 geneigte Anlauffläche 48, die sich kegelförmig um die Relativbewegungsachse 16 herum erstreckt.

Ausgehend von dem unverformten Ruhezustand des Rastelements 18 sind die Rastbereiche 36 und 38 jeweils entlang eines bogenförmigen Bewegungswegs 52 um den Befestigungsabschnitt 34 herum oder relativ zu diesem verschwenkbar, vergleiche Figur 3b.

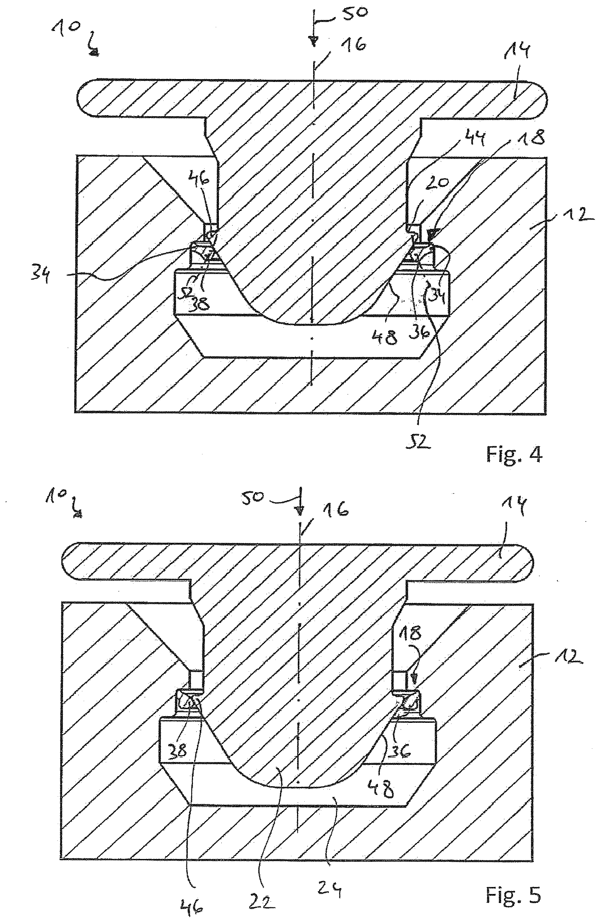

Bei Einführung des zweiten Bauteils 14 längs der Relativbewegungsachse 16 beziehungsweise des Kopfs 22 des zweiten Bauteils 14 in die Kopfaufnahme 24 des ersten Bauteils 12 wird das zweite Bauteil 14 längs der Relativbewegungsachse 16 in einer Montagerichtung 50 in Richtung auf das erste Bauteil 12 bewegt. Dabei gelangt die Anlauffläche 48 in Kontakt mit den Rastbereichen 36 und 38 des Rastelements 18, vergleiche Figur 4. Hierbei wird ausgehend von dem unverformten Ruhezustand des Rastelements 18 ein Teil des Bewegungswegs 52, der zumindest eine Komponente aufweist, die zu der Montagerichtung 50 parallel ist, als zweiter Teil 52b des Bewegungswegs 52 bezeichnet, vergleiche Figur 3b.

Im Zuge der Montage der Bauteile 12 und 14 gleiten die Rastbereiche 36 und 38 an der Anlauffläche 48 des Kopfes 22 entlang, werden dabei zunehmend entlang des genannten zweiten Teils 52b des Bewegungswegs 52 verschwenkt und bewegen sich dabei gleichzeitig bezogen auf den unverformten Ruhezustand nach radial außen, vergleiche Figur 5.

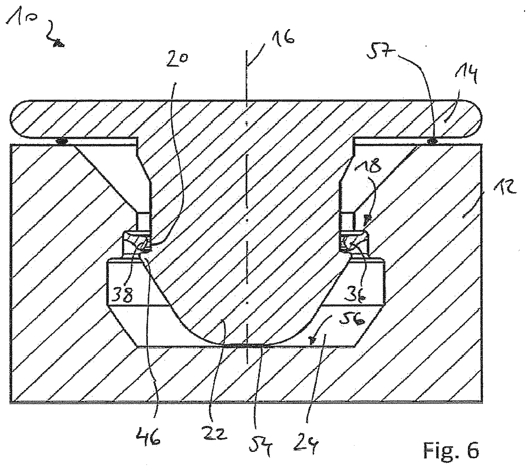

Durch die Bewegung nach radial außen ist ein zwischen den Rastbereichen 36 und 38 begrenztes Öffnungsmaß schließlich genauso groß wie der maximale Durchmesser des Vorsprungs 46. Dies führt bei weiterer Bewegung des zweiten Bauteils 14 längs der Montagerichtung 50 dazu, dass die Rastbereiche 36 und 38 des Rastelements 18 nach Überwindung des Vorsprungs 46 wieder entlang des zweiten Teils 52b des Bewegungswegs 52 in ihren unverformten Ruhezustand zurückfedern, vergleiche Figur 6. In diesem Zustand sind die Rastbereiche 36, 38 des Rastelements 18 in der Rastelementaufnahme 20 des zweiten Bauteils 14 aufgenommen; der Montagezustand der Verbindungsanordnung 10 ist erreicht.

In diesem Montagezustand ist es möglich, dass ein freies Ende 54 des Kopfs 22 an einer Begrenzungsfläche 56 der Kopfaufnahme 24 anliegt, wodurch eine weitere Bewegung des zweiten Bauteils 14 längs der Relativbewegungsachse 16 in Montagerichtung 50 verhindert wird. Es ist zusätzlich oder alternativ auch möglich, dass eine solche weitere Bewegung durch ein ringförmig umlaufendes Dichtelement 57 verhindert wird, das zwischen dem ersten Bauteil 12 und dem zweiten Bauteil 14 wirksam ist und in Figur 6 schematisch dargestellt ist.

Ausgehend von dem in Figur 6 dargestellten Montagezustand der Verbindungsanordnung 10 kann die Verbindunganordnung 10 demontiert werden, indem das zweite Bauteil 14 längs der Relativbewegungsachse 16 in einer zu der Montagerichtung 50 entgegengesetzten Demontagerichtung 58 bewegt wird. Hierbei wird der Kopf 22 des zweiten Bauteils 14 aus der Kopfaufnahme 24 des ersten Bauteils 12 herausgeführt. Während der Demontage der Bauteile 12 und 14 werden die Rastbereiche 36, 38 des Rastelements 18 entlang des Bewegungswegs 52 verschwenkt, ausgehend von dem in Figur 6 dargestellten unverformten Ruhezustand entlang eines ersten Teils 52a des Bewegungswegs 52, vergleiche Figur 3b. Dieser erste Teil 52a des Bewegungswegs 52 ist durch den Anschlag 30 begrenzt.

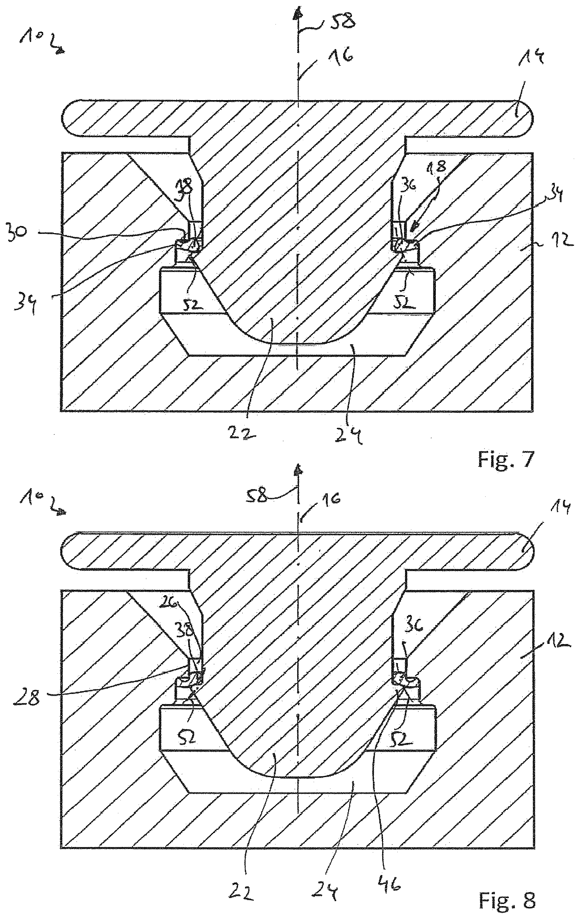

Ausgehend von dem in Figur 6 dargestellten Montagezustand bewirkt der in Demontagerichtung 58 formschlüssige Eingriff des Vorsprungs 46 mit den Rastbereichen 36 und 38, dass sich diese mit zumindest einer zu der Demontagerichtung 58 parallelen Komponente um den Befestigungsabschnitt 34 herum oder relativ zu diesem verschwenken, bis zumindest ein Teilbereich des Rastelements 18 in Anlage mit dem Anschlag 30 gelangt, vergleiche Figur 7.

Eine weitere Bewegung des zweiten Bauteils 14 längs der Demontagerichtung 58 bewirkt, dass der Vorsprung 46 des Kopfs 22 unter Zwischenlage der Rastbereiche 36, 38 an der ersten Umfangsfläche 28 vorbeibewegt wird. Dabei kann eine kurzzeitige, lokale Verquetschung der Rastbereiche 36 und 38 in dem Ringraum zwischen dem maximalen Durchmesser des Vorsprungs 46 und der ersten Umfangsfläche 28 auftreten. Bei weiterer Bewegung des zweiten Bauteils 14 längs der Demontagerichtung 58 gelangt der Vorsprung 46 des Kopfs 22 schließlich außer Eingriff mit dem Eingang 26 der Kopfaufnahme 24, sodass schließlich der in den Figuren 3a und 3b dargestellte Demontagezustand wieder erreicht ist, in welchem das Rastelement 18, bedingt durch seine Federelastizität, wieder seinen unverformten Ruhezustand einnimmt.

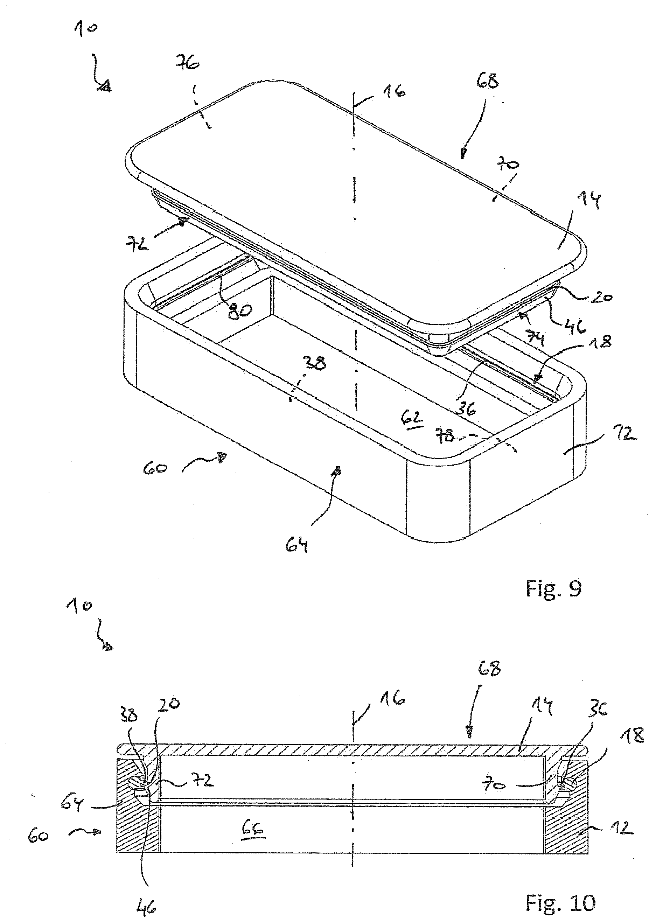

Die vorstehend beschriebene Verbindungsanordnung 10 bildet eine Druckknopfanordnung. Nachfolgend wird unter Bezugnahme auf Figuren 9 und 10 eine weitere Ausführungsform einer Verbindungsanordnung 10 erläutert, welche eine Behälteranordnung bildet.

Bei der Verbindungsanordnung 10 gemäß Figuren 9 und 10 ist das erste Bauteil 12 durch ein Behältnis 60 gebildet, das einen Behälterboden 62 und eine sich in Umfangsrichtung um den Behälterboden 62 erstreckende Behälterwand 64 aufweist. Der Behälterboden 62 und die Behälterwand 64 begrenzen einen Hohlraum 66, vergleiche Figur 10.

Das zweite Bauteil 14 ist durch einen Deckel 68 gebildet, der gemeinsam mit dem Behältnis 60 in einem Montagezustand eine Behälteranordnung bildet, deren Hohlraum 66 in allen Raumrichtungen begrenzt ist.

Bei der Verbindungsanordnung 10 gemäß Figuren 9 und 10 sind eine Rastelementaufnahme 20 und ein Materialvorsprung 46 an Stegen angeordnet, welche jeweils paarweise einander gegenüberliegen, so beispielsweise die Stege 70 und 72 und die Stege 74 und 76. Insgesamt erstrecken sich Stege 70 bis 76 in ihrer Gesamtheit in Umfangsrichtung um eine zentrale Behälterachse, welche der Relativbewegungsachse 16 entspricht.

Das erste Bauteil 12 in Form des Behältnisses 60 ist mit einem Rastelement 18 versehen, das sich ebenfalls entlang seines Umfangs um die Relativbewegungsachse 16 herum erstreckt. Es weist jeweils paarweise einander gegenüberliegende Rastbereiche 36 und 38 beziehungsweise 78 und 80 auf.

Die paarweise einander gegenüberliegenden Stege 70 und 72 und/oder die paarweise einander gegenüberliegenden Stege 74 und 76 weisen vorzugsweise einen geradlinigen Verlauf auf, was auch für andere Ausführungsformen einer Verbindungsanordnung 10 vorteilhaft sein kann.

Die paarweise einander gegenüberliegenden Rastbereiche 36 und 38 und/oder die paarweise einander gegenüberliegenden Rastbereiche 78 und 80 weisen vorzugsweise einen geradlinigen Verlauf auf, was auch für andere Ausführungsformen einer Verbindungsanordnung 10 vorteilhaft sein kann.

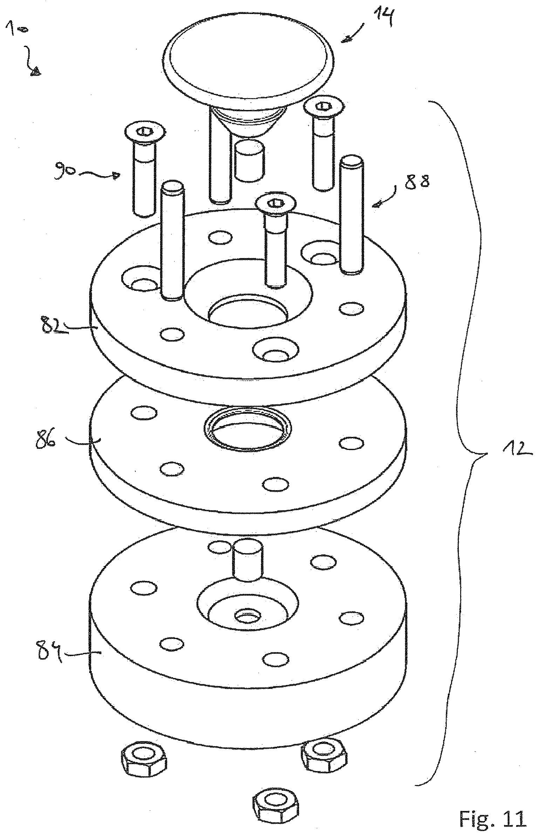

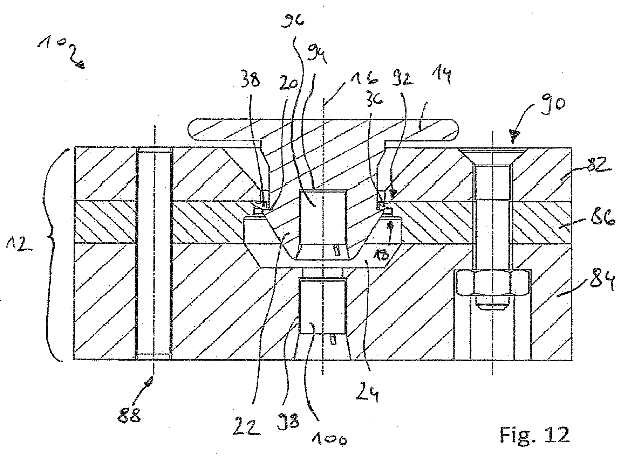

Hinsichtlich der Montage und Demontage der Verbindungsanordnung 10 gemäß Figuren 9 und 10 wird auf die vorstehende Beschreibung zu der Verbindungsanordnung 10 gemäß Figuren 1 bis 8 verwiesen. Dies gilt auch für eine nachfolgend unter Bezugnahme auf die Figuren 11 und 12 beschriebene weitere Ausführungsform einer Verbindungsanordnung 10. Nachfolgend werden lediglich die Besonderheiten der in Figuren 11 und 12 dargestellten Verbindungsanordnung 10 beschrieben, welche jeweils auch bei allen anderen Verbindungsanordnungen 10 Anwendung finden können.

Bei der Verbindungsanordnung 10 gemäß Figuren 11 und 12 weist das erste Bauteil eine Mehrzahl von schichtförmigen Elementen auf. Das erste Bauteil 12 umfasst zwei Außenschichten 82 und 84, welche gemeinsam eine Zwischenschicht 86 begrenzen. Die Schichten 82 bis 86 sind über Verbindungseinrichtungen miteinander verbunden, beispielsweise in Form mindestens einer Verstiftung 88 und/oder in Form mindestens einer Verschraubung 90.

Die Zwischenschicht 86 ist aus einem federelastischen Material hergestellt und weist einen einstückig mit der Zwischenschicht 86 ausgebildeten Bereich 92 auf, der ein ringförmiges Rastelement 18 bildet.

Eine weitere Besonderheit der Verbindungsanordnung 10 gemäß Figuren 11 und 12 besteht darin, dass das zweite Bauteil 14, beispielsweise im Bereich des Kopfes 22, eine Ausnehmung 94 aufweist, welche zur Anordnung eines dritten Bauteils 96 dienen kann, beispielsweise eines (ersten) Sensorteils.

Es ist möglich, dass auch das erste Bauteil 12, beispielsweise benachbart zu einer Kopfaufnahme 24, einen Aufnahmeraum 98 aufweist, der zur Anordnung eines weiteren Bauteils 100, beispielsweise eines (zweiten) Sensorteils dient, das optional mit dem dritten Bauteil 96, das an dem zweiten Bauteil 14 angeordnet ist, zusammenwirkt.

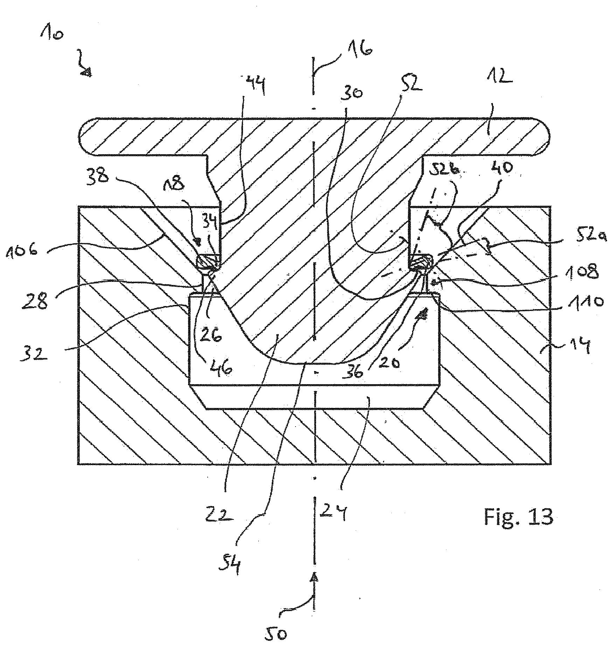

Bei der in den Figuren 13 bis 18 dargestellten weiteren Ausführungsform einer Verbindunganordnung 10 handelt es sich wie bei der Ausführungsform gemäß Figuren 1 bis 8 um eine Druckknopfanordnung.

Die Verbindungsanordnung 10 gemäß Figuren 13 bis 18 umfasst ein erstes Bauteil 12 mit einem Kopf 22 und ein zweites Bauteil 14 mit einer Kopfaufnahme 24. Der Kopf 22 erstreckt sich ausgehend von einem freien Ende 54 bis hin zu einem Materialvorsprung 46, an welchem sich eine nach radial innen versetzte Umfangsfläche eines Schafts 44 anschließt. Im Bereich eines Übergangs zwischen dem Materialvorsprung 46 und dem Schaft 44 ist ein sich ringförmig um eine Relativbewegungsachse 16 erstreckendes Rastelement 18 angeordnet.

Das Rastelement 18 ist mit einem Befestigungsabschnitt 34 in dem genannten Bereich des ersten Bauteils 12 festgelegt und erstreckt sich in einer zu der Relativbewegungsachse 16 parallelen Querschnittsebene gesehen entlang einer Ebene 40, die schräg zu der Relativbewegungsachse 16 verläuft. Das Rastelement 18 weist bezogen auf den Befestigungsabschnitt 34 radial außen angeordnete Rastbereiche 36, 38 auf, welche sich jeweils über 180 Winkelgrad um die Relativbewegungsachse 16 herum erstrecken können und sich zu einem insgesamt ringförmig geschlossenen Rastbereich ergänzen können.

Die Orientierung der Ebene 40 bezieht sich auf einen unverformten Ruhezustands des Rastelements 18. Ausgehend von dem Ruhezustand des Rastelements 18 sind die Rastbereiche 36, 38 um den Befestigungsabschnitt 34 herum oder relativ zu diesem entlang eines ersten Teils 52a des Bewegungswegs 52 verschwenkbar, bis hin zu einem Anschlag 30, der durch den Materialvorsprung 46 des Kopfs 22 gebildet ist. Ferner sind die Rastbereiche 36, 38 ausgehend von dem Ruhezustand entlang eines zweiten Teils 52b des Bewegungswegs 52 verschwenkbar, also in Richtung auf den Schaft 44.

Das zweite Bauteil 14 weist eine trichterförmige Anlauffläche 106 auf, welche sich kegelförmig um die Relativbewegungsachse 16 herum erstreckt und an einem Eingang 26 der Kopfaufnahme 24 mündet. Der Eingang 26 ist in Umfangsrichtung durch eine erste Umfangsfläche 28 begrenzt. Die erste Umfangsfläche 28 ist durch einen sich nach radial innen erstreckenden Materialvorsprung 108 gebildet, der auf seiner der Anlauffläche 106 abgewandten Seite eine Hinterschnittfläche 110 aufweist, welche sich ausgehend von der ersten Umfangsfläche 28 nach radial außen bis hin zu einer zweiten Umfangsfläche 32 der Kopfaufnahme 24 erstreckt. Die Hinterschnittfläche 110 bildet eine Rastelementaufnahme 20 für Rastbereiche 36, 38 des Rastelements 18.

Ausgehend von dem in Figur 13 dargestellten Demontagezustand der Verbindungsanordnung 10 können das erste Bauteil 12 und das zweiten Bauteil miteinander gefügt werden. Dabei bezieht sich eine parallel zu der Relativbewegungsachse 16 gerichtete Montagerichtung 50 auf das zweite Bauteil 14, wobei es natürlich auch möglich ist, dass das zweite Bauteil 14 nicht bewegt wird und nur das erste Bauteil bewegt wird, oder dass beide Teile 12 und 14 aufeinander zu bewegt werden. Dabei ergibt sich aus Sicht des zweiten Bauteils 14 aber immer die in Figur 13 dargestellte Montagerichtung 50, welche sich auf die relative Bewegung des zweiten Bauteils 14 zu dem ersten Bauteil 12 bezieht.

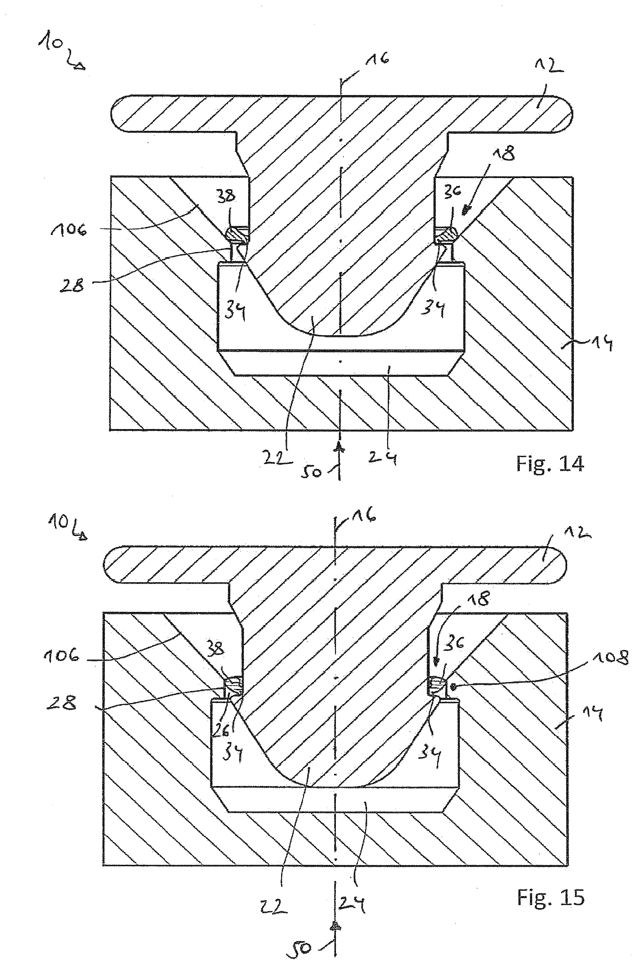

Ausgehend von dem in Figur 13 dargestellten Demontagezustand hat eine vorstehend erläuterte Bewegung der Bauteile 12 und/oder 14 zur Folge, dass die Rastbereiche 36, 38 des Rastelements 18 an der Anlauffläche 106 zur Anlage kommen und ausgehend von dem unverformten Ruhezustand des Rastelements 18 entlang des zweiten Teils 52b des Bewegungswegs 52 um die Befestigungsabschnitte 34 herum oder relativ zu diesen verschwenkt werden, vergleiche Figur 14.

In einer folgenden Montagephase, vergleiche Figur 15, ist der Kopf 22 so weit in die Kopfaufnahme 24 eingeführt, dass die Rastbereiche 36, 38 des Rastelements 18 nicht mehr mit der Anlauffläche 106 in Kontakt stehen, sondern entlang ihres zweiten Teils 52b des Bewegungswegs 52 soweit verschwenkt sind, dass sie in den durch die erste Umfangsfläche 28 begrenzten Eingang 26 der Kopfaufnahme 24 eintauchen.

Zum Abschluss des Montagevorgangs ist der Kopf 22 so weit in der Kopfaufnahme 24 aufgenommen, dass die Rastbereiche 36, 38 des Rastelements 18 außer Eingriff mit der ersten Umfangsfläche 28 des Materialvorsprungs 108 gelangen und in der Rastelementaufnahme 20 aufgenommen sind, wobei das Rastelement 18 vorzugsweise wieder einen unverformten (entspannten) Ruhezustand einnimmt.

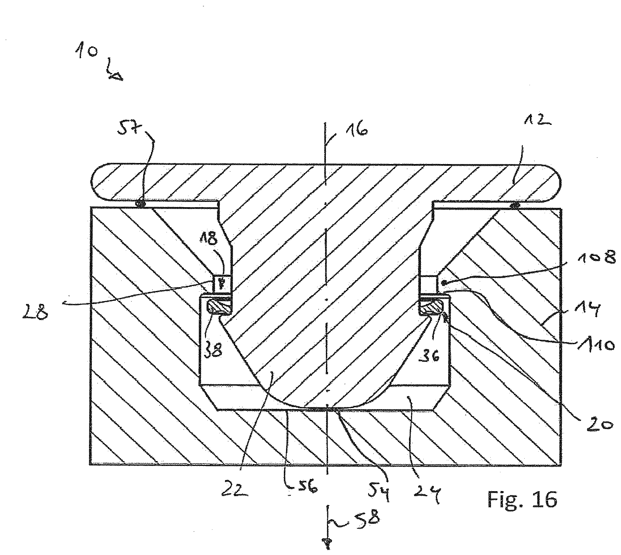

In diesem Montagezustand der Verbindungsanordnung 10 ist es möglich, dass die Rastbereiche 36, 38 die Hinterschnittfläche 110 berühren oder zu dieser Hinterschnittfläche 110 geringfügig beabstandet sind. Ein solcher Abstand kann beispielsweise durch eine Auflage der Stirnfläche 54 des Kopfs 22 auf einer Begrenzungsfläche 56 der Kopfaufnahme 24 definiert sein und/oder durch die Anordnung eines Dichtelements 57, das die Relativbewegungsachse 16 ringförmig umfasst und das dichtend zwischen dem ersten Bauteil 12 und dem zweiten Bauteil 14 wirksam ist, vergleiche Figur 16.

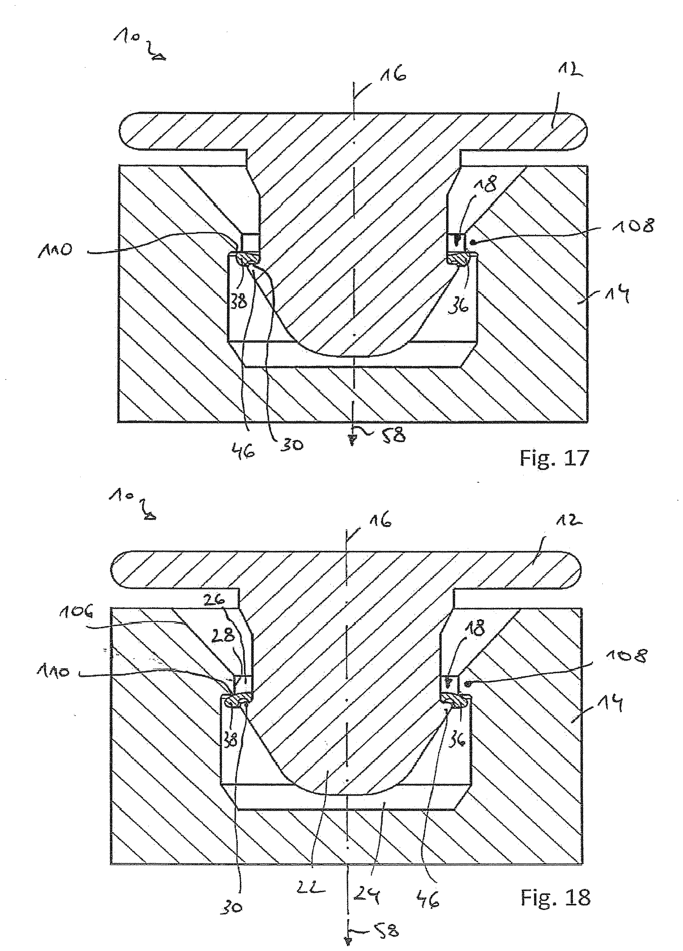

Ausgehend von dem in Figur 16 dargestellten Montagezustand der Verbindungsanordnung 10 erfolgt eine Demontage in einer bezogen auf das zweite Bauteil 14 mit 58 bezeichneten Demontagerichtung. Wie vorstehend erörtert, ist es möglich, dass in dem Montagezustand der Verbindungsanordnung 10 die Rastbereiche 36, 38 an der Hinterschnittfläche 110 anliegen oder zu der Hinterschnittfläche 110 beabstandet sind. Für den Fall, dass ein solcher Abstand vorgesehen ist, wird dieser Abstand in einer ersten Demontagephase solange verkleinert, bis die Rastbereiche 36, 38 an der Hinterschnittfläche 110 zur Anlage kommen. Während dieser Phase verbleibt das Rastelement 18 in seinem unverformten Ruhezustand. Mit Anlage der Rastbereiche 36, 38 an der Hinterschnittfläche 110 bewirkt eine weitere Relativbewegung der Bauteile 12 und 14 längs der Relativbewegungsachse 16, dass sich die Rastbereiche 36, 38 entlang des ersten Teils 52a des Bewegungswegs 52 (vergleiche Figur 13) verformen, bis die Rastbereiche 36, 38 an dem durch den Materialvorsprung 46 gebildeten Anschlag 30 zur Anlage kommen, vergleiche Figur 17.

Eine weitere Bewegung der Bauteile 12 und 14 längs der Relativbewegungsachse 16 über den in Figur 18 dargestellten Zustand hinaus führt dazu, dass die Rastbereiche 36, 38 außer Kontakt mit der Hinterschnittfläche 110 gelangen und anschließend in den ringförmigen Bereich des Eingangs 26 der Kopfaufnahme 24 eintauchen und dabei zwischen der ersten Umfangsfläche 28 des zweiten Bauteils 14 und dem Materialvorsprung 46 des ersten Bauteils 12 angeordnet sind. Abhängig von den Größenverhältnissen können die Rastbereiche 36, 38 dabei in dem Spalt zwischen dem Vorsprung 46 und dem Vorsprung 108 auch vorübergehend verquetscht werden.

Eine weitere Relativbewegung führt dann dazu, dass die Rastbereiche 36, 38 außer Eingriff mit der ersten Umfangsfläche 28 gelangen und schließlich auch zu der Anlauffläche 106 beabstandet sind, sodass das Rastelement 18 wieder seinen unverformten Ruhezustand einnehmen kann, vergleiche Figur 13.

## Patentansprüche

1. Verbindungsanordnung (10) in Form einer Druckknopfanordnung oder einer Behälteranordnung, mit einem ersten Bauteil (12) und einem zweiten Bauteil (14), welche ausgehend von einem voneinander getrennten Demontagezustand entlang einer Relativbewegungsachse (16) miteinander fügbar, in einen miteinander verbundenen Montagezustand und wieder in den Demontagezustand überführbar sind, wobei an dem ersten Bauteil (12) mindestens ein die Relativbewegungsachse (16) ring- oder segmentförmig umfangendes Rastelement (18) angeordnet ist und wobei an dem zweiten Bauteil (14) mindestens eine die Relativbewegungsachse (16) ring- oder segmentförmig umfangende Rastelementaufnahme (20) angeordnet ist, welche in dem Montagezustand mit mindestens zwei in Umfangsrichtung gesehen zueinander versetzt angeordneten Rastbereichen (36, 38) des mindestens einen Rastelements (18) zusammenwirkt, wobei die Rastbereiche (36, 38) des mindestens einen Rastelements (18) jeweils ausgehend von einem unverformten Ruhezustand entlang eines Bewegungswegs (52) bewegbar sind, der zumindest eine zu der Relativbewegungsachse (16) parallele Komponente aufweist, wobei ein erster Teil (52a) des Bewegungswegs (52) bezogen auf den Ruhezustand in eine Demontagerichtung (58) weist und wobei ein zweiter Teil (52b) des Bewegungswegs (52) bezogen auf den Ruhezustand in eine der Demontagerichtung (58) entgegengesetzte Montagerichtung (50) weist, und wobei sich das mindestens eine Rastelement (18) im Zuge der Demontage der Bauteile (12, 14) an mindestens einem Anschlag (30) abstützt, **dadurch gekennzeichnet, dass** sich das mindestens eine Rastelement (18) in einer zu der Relativbewegungsachse (16) parallelen Querschnittsebene gesehen in seinem Ruhezustand entlang einer Ebene (40) erstreckt, die schräg zu der Relativbewegungsachse (16) verläuft, und dass der erste Teil des Bewegungswegs durch den mindestens einen Anschlag (30) begrenzt ist, an welchem sich das mindestens eine Rastelement (18) im Zuge der Demontage der Bauteile (12, 14) abstützt, wobei die Rastbereiche (36, 38) in dem Ruhezustand des Rastelements (18) zu dem Anschlag (30) beabstandet sind.

2. Verbindungsanordnung (10) nach Anspruch 1, **dadurch gekennzeichnet, dass** die Länge des ersten Teils (52a) des Bewegungswegs (52) von der Länge des zweiten Teils (52b) des Bewegungswegs (52) abweicht, insbesondere kürzer ist.

3. Verbindungsanordnung (10) nach Anspruch 1 oder 2, **dadurch gekennzeichnet, dass** der Anschlag (30) an dem ersten Bauteil (12) angeordnet ist.

4. Verbindungsanordnung (10) nach einem der voranstehenden Ansprüche, **dadurch gekennzeichnet, dass** das Rastelement (18) insgesamt oder zumindest in einem Teilbereich federelastisch ist.

5. Verbindungsanordnung (10) nach einem der voranstehenden Ansprüche, **dadurch gekennzeichnet, dass** sich das mindestens eine Rastelement (18) in einer zu der Relativbewegungsachse (16) parallelen Querschnittsebene gesehen zwischen einem Befestigungsabschnitt (34) und einem freien Ende (42) erstreckt, wobei der Befestigungsabschnitt (34) insbesondere ringförmig ausgebildet ist und mit dem ersten Bauteil (12) verbunden ist und wobei das freie Ende (42) relativ zu dem Befestigungsabschnitt (34) entlang des Bewegungswegs (52) oder parallel zu dem Bewegungsweg (52) verschwenkbar ist.

6. Verbindungsanordnung (10) nach Anspruch 5, **dadurch gekennzeichnet, dass** ein mit dem ersten Teil (52a) des Bewegungswegs (52) korrespondierender erster Schwenkwinkel minimal ca. 5° und/oder maximal ca. 100° beträgt.

7. Verbindungsanordnung (10) nach Anspruch 5 oder 6,
**dadurch gekennzeichnet, dass** ein mit dem zweiten Teil (52b) des Bewegungswegs (52) korrespondierender zweiter Schwenkwinkel minimal ca. 10° beträgt.

8. Verbindungsanordnung (10) nach einem der voranstehenden Ansprüche, **dadurch gekennzeichnet, dass** die Rastelementaufnahme (20) durch einen bezogen auf die Relativbewegungsachse (16) sich in radialer Richtung erstreckenden Materialvorsprung (46, 108) gebildet ist, der in dem Montagezustand der Verbindungsanordnung (10) einen Hinterschnitt zur Aufnahme eines Rastbereichs (36, 38) bildet.

9. Verbindungsanordnung (10) nach einem der voranstehenden Ansprüche, **dadurch gekennzeichnet, dass** die Verbindungsanordnung (10) mindestens ein die Relativbewegungsachse (16) ringförmig umfangendes Dichtelement (57) aufweist, das in dem Montagezustand der Verbindungsanordnung (10) zwischen dem ersten Bauteil (12) und dem zweiten Bauteil (14) dichtend wirksam ist.

10. Verbindungsanordnung (10) nach einem der voranstehenden Ansprüche, **dadurch gekennzeichnet, dass** das erste Bauteil (12) und/oder das zweite Bauteil (14) eine Ausnehmung (94) oder Aussparung zur Anordnung eines dritten Bauteils (96) und/oder eine Öffnung zur Durchführung eines Fluids aufweist oder aufweisen.

11. Verbindungsanordnung (10) nach einem der voranstehenden Ansprüche, **dadurch gekennzeichnet, dass** die Verbindungsanordnung eine Druckknopfanordnung ist, wobei an dem ersten Bauteil (12) ein Kopf (22) und an dem zweiten Bauteil (14) eine Kopfaufnahme (24) vorgesehen ist, oder wobei an dem ersten Bauteil (12) eine Kopfaufnahme (24) und an dem zweiten Bauteil (14) ein Kopf (22) vorgesehen ist.

12. Verbindungsanordnung (10) nach einem der Ansprüche 1 bis 10, **dadurch gekennzeichnet, dass** die Verbindungsanordnung (10) eine Behälteranordnung ist, mit einem ersten Bauteil (12) in Form eines einen Hohlraum begrenzenden Behältnisses (60) und mit einem zweiten Bauteil (14) in Form eines Deckels (68), oder mit einem ersten Bauteil (12) in Form eines Deckels und mit einem zweiten Bauteil (14) in Form eines einen Hohlraum begrenzenden Behältnisses.

13. Verwendung einer Verbindungsanordnung (10) nach einem der voranstehenden Ansprüche zur Herstellung und/oder zum Betrieb einer Medizintechnikvorrichtung.

## Claims

1. A connection assembly (10) being a snap fastener assembly or a container assembly, the connection assembly (10) comprising a first component (12) and a second component (14) which can be joined together along an axis of relative movement (16), starting from a separated disassembled state, into an interconnected assembled state, and which can be transferred back into the disassembled state, the first component (12) being provided with at least one latching element (18) which surrounds the axis of relative movement (16) in an annular or segment-shaped manner, and the second component (14) being provided with at least one latching element receptacle (20) which surrounds the axis of relative movement (16) in an annular or segment-shaped manner and cooperates with at least two latching portions (36, 38) of the at least one latching element (18) in the assembled state, the latching portions being offset relative to each other when viewed in the circumferential direction, wherein the latching portions (36, 38) of the at least one latching element (18) are each movable along a movement path (52) starting from a non-deformed rest state, which movement path has at least a component parallel to the axis of relative movement (16), a first portion (52a) of the movement path (52) pointing in a disassembly direction (58) with respect to the rest state, and a second portion (52b) of the movement path (52) pointing in an assembly direction (50) opposite the disassembly direction (58) with respect to the rest state, wherein in the course of disassembling the at least one latching element (18) rests against at least one stop (30), **characterized in that**, when in its rest state, the at least one latching element (18) extends along a plane (40) that is oblique or perpendicular to the axis of relative movement (16) when viewed in a cross-sectional plane parallel to the axis of relative movement (16), and **in that** the first portion of the movement path being limited by the at least one stop (30) against which the at least one latching element (18) rests in the course of disassembling the components (12, 14), wherein the latching portions (36, 38) are spaced apart from the stop (30) when the latching element (18) is its rest state.

2. The connection assembly (10) as recited in claim 1, **characterized in that** the length of the first portion (52a) of the movement path (52) differs from, in particular is shorter than, the length of the second portion (52b) of the movement path (52).

3. The connection assembly (10) as recited in claim 1 or 2, **characterized in that** the stop (30) is disposed on the first component (12).

4. The connection assembly (10) as recited in any of the preceding claims, **characterized in that** the latching element (18) is springy in its entirety or at least in a portion thereof.

5. The connection assembly (10) as recited in any of the preceding claims, **characterized in that** the at least one latching element (18) extends between a mounting portion (34) and a free end (42) when viewed in a cross-sectional plane parallel to the axis of relative movement (16), the mounting portion (34) being in particular annularly shaped and connected to the first component (12), and the free end (42) being pivotable relative to the mounting portion (34) along the movement path (52) or parallel to the movement path (52).

6. The connection assembly (10) as recited in claim 5, **characterized in that** a first pivot angle corresponding to the first portion (52a) of the movement path (52) is at least about 5° and/or no more than about 100°.

7. The connection assembly (10) as recited in claim 5 or 6, **characterized in that** a second pivot angle corresponding to the second portion (52b) of the movement path (52) is at least about 10°.

8. The connection assembly (10) as recited in any of the preceding claims, **characterized in that** the latching element receptacle (20) is formed by a projection of material (46, 108) which extends in the radial direction relative to the axis of relative movement (16) and which forms an undercut for receiving a latching portion (36, 38) when the connection assembly (10) is in the assembled state.

9. The connection assembly (10) as recited in any of the preceding claims, **characterized in that** the connection assembly (10) has at least one sealing element (57) which annularly surrounds the axis of relative movement (16) and which provides a sealing effect between the first component (12) and the second component (14) when the connection assembly (10) is in the assembled state.

10. The connection assembly (10) as recited in any of the preceding claims, **characterized in that** the first component (12) and/or the second component (14) have/has a recess (94) or cut-out for accommodating a third component (96) and/or an opening for passage of a fluid therethrough.

11. The connection assembly (10) as recited in any of the preceding claims, **characterized in that** the connection assembly is a snap fastener assembly, wherein the first component (12) is provided with a head (22) and the second component (14) is provided with a head receptacle (24), or wherein the first component (12) is provided with a head receptacle (24) and the second component (14) is provided with a head (22).

12. The coupling assembly (10) as recited in any of claims 1 through 10, **characterized in that** the connection assembly (10) is a container assembly which includes a first component (12) in the form of a receptacle (60) bounding a cavity and a second component (14) in the form of a cover (68), or which includes a first component (12) in the form of a cover and a second component (14) in the form of a receptacle bounding a cavity.

13. The use of a connection assembly (10) according to any of the preceding claims for the manufacture and/or operation of a technical medical device.

## Revendications

1. Ensemble de raccordement (10) sous forme d'un ensemble de bouton-pression ou d'un ensemble de contenant, avec un premier composant (12) et un deuxième composant (14), lesquels peuvent être assemblés l'un avec l'autre à partir d'un état de démontage séparés l'un de l'autre le long d'un axe de mouvement relatif, peuvent être amenés dans un état de montage reliés l'un à l'autre et à nouveau dans l'état de démontage, dans lequel au moins un élément d'encliquetage (18) entourant l'axe de mouvement relatif (16) en forme d'anneau ou de segment est disposé sur le premier composant (12) et dans lequel au moins un logement d'élément d'encliquetage (20) entourant l'axe de mouvement relatif (16) en forme d'anneau ou de segment est disposé sur le deuxième composant (14), lequel coopère dans l'état de montage avec au moins deux zones d'encliquetage (36, 38) de l'au moins un élément d'encliquetage (18) disposées de manière décalée l'une de l'autre vu dans la direction périphérique, dans lequel les zones d'encliquetage (36, 38) du au moins un élément d'encliquetage (18) sont mobiles respectivement à partir d'un état de repos non déformé le long d'une voie de mouvement (52), qui présente au moins une composante parallèle à l'axe de mouvement relatif (16), dans lequel une première partie (52a) de la voie de mouvement (52) pointe par rapport à l'état de repos dans une direction de démontage (58) et dans lequel une deuxième partie (52b) de la voie de mouvement (52) par rapport à l'état de repos pointe dans une direction de montage (50) opposée à la direction de démontage (58), et dans lequel le au moins un élément d'encliquetage (18) s'appuie au cours du démontage des composants (12, 14) sur au moins une butée (30), **caractérisé en ce que** le au moins un élément d'encliquetage (18) s'étend vu dans un plan de section transversale parallèle à l'axe de mouvement relatif (16) dans son état de repos le long d'un plan (40), qui s'étend de manière inclinée par rapport à l'axe de mouvement relatif (16), et que la première partie de la voie de mouvement est délimitée par la au moins une butée (30), sur laquelle le au moins un élément d'encliquetage (18) s'appuie au cours du démontage des composants (12, 14), dans lequel les zones d'encliquetage (36, 38) dans l'état de repos de l'élément d'encliquetage (18) sont espacées de la butée (30).

2. Ensemble de raccordement (10) selon la revendication 1, **caractérisé en ce que** la longueur de la première partie (52a) de la voie de mouvement (52) diffère de la longueur de la deuxième partie (52b) de la voie de mouvement (52), en particulier est plus courte.

3. Ensemble de raccordement (10) selon la revendication 1 ou 2, **caractérisé en ce que** la butée (30) est disposée sur le premier composant (12).

4. Ensemble de raccordement (10) selon l'une quelconque des revendications précédentes, **caractérisé en ce que** l'élément d'encliquetage (18) est élastique dans son ensemble ou au moins dans une zone partielle.

5. Ensemble de raccordement (10) selon l'une quelconque des revendications précédentes, **caractérisé en ce que** le au moins un élément d'encliquetage (18) s'étend vu dans un plan de section transversale parallèle à l'axe de mouvement relatif (16) entre une section de fixation (34) et une extrémité libre (42), dans lequel la section de fixation (34) est réalisée en particulier de manière annulaire et est reliée au premier composant (12) et dans lequel l'extrémité libre (42) peut pivoter par rapport à la section de fixation (34) le long de la voie de mouvement (52) ou parallèlement à la voie de mouvement (52).

6. Ensemble de raccordement (10) selon la revendication 5, **caractérisé en ce qu'**un premier angle de pivotement correspondant à la première partie (52a) de la voie de mouvement (52) atteint au minimum environ 5° et/ou au maximum environ 100°.

7. Ensemble de raccordement (10) selon la revendication 5 ou 6, **caractérisé en ce qu'**un deuxième angle de pivotement correspondant à la deuxième partie (52b) de la voie de mouvement (52) atteint au minimum environ 10°.

8. Ensemble de raccordement (10) selon l'une quelconque des revendications précédentes, **caractérisé en ce que** le logement d'élément d'encliquetage (20) est formé par une partie saillante de matériau (46, 108) s'étendant dans la direction radiale par rapport à l'axe de mouvement relatif (16), qui forme dans l'état de montage de l'ensemble de raccordement (10) un dégagement pour le logement d'une zone d'encliquetage (36, 38).

9. Ensemble de raccordement (10) selon l'une quelconque des revendications précédentes, **caractérisé en ce que** l'ensemble de raccordement (10) présente au moins un élément d'étanchéité (57) entourant de manière annulaire l'axe de mouvement relatif (16), qui agit de manière étanche dans l'état de montage de l'ensemble de raccordement (10) entre le premier composant (12) et le deuxième composant (14).

10. Ensemble de raccordement (10) selon l'une quelconque des revendications précédentes, **caractérisé en ce que** le premier composant (12) et/ou le deuxième composant (14) présente ou présentent un creux (94) ou évidement pour la disposition d'un troisième composant (96) et/ou une ouverture pour le passage d'un fluide.

11. Ensemble de raccordement (10) selon l'une quelconque des revendications précédentes, **caractérisé en ce que** l'ensemble de raccordement est un ensemble de bouton-pression, dans lequel une tête (22) est prévue sur le premier composant (12) et un logement de tête (24) sur le deuxième composant (14), ou dans lequel un logement de tête (24) est prévu sur le premier composant (12) et une tête (22) sur le deuxième composant (14).

12. Ensemble de raccordement (10) selon l'une quelconque des revendications 1 à 10, **caractérisé en ce que** l'ensemble de raccordement (10) est un ensemble de contenant, avec un premier composant (12) sous forme d'un contenant (60) délimitant une cavité et avec un deuxième composant (14) sous forme d'un couvercle (68), ou avec un premier composant (12) sous forme d'un couvercle et avec un deuxième composant (14) sous forme d'un contenant délimitant une cavité.

13. Utilisation d'un ensemble de raccordement (10) selon l'une quelconque des revendications précédentes pour la fabrication et/ou pour le fonctionnement d'un dispositif de technique médicale.
